# FASCICULE DE BREVET EUROPEEN

(11) **EP 3 749 937 B1**
(45) Date de publication et mention de la délivrance du brevet: **19.08.2026**
(21) Numéro de dépôt: 19702114.0
(22) Date de dépôt: 05.02.2019
(51) Int. Cl.: G01K 3/00

(54) **METHODE ET DISPOSITIF POUR DETECTION DE DEPASSEMENT D'UN SEUIL DE TEMPÉRATURE PRÉDÉFINI**
VERFAHREN UND VORRICHTUNG ZUR ERKENNUNG EINER ÜBERSCHREITUNG EINER VORGEGEBENEN TEMPERATURSCHWELLE
METHOD AND DEVICE FOR DETECTING WHEN A PREDEFINED TEMPERATURE THRESHOLD IS EXCEEDED

(30) Priorité: 07.02.2018 FR 1851033; 07.02.2018 FR 1851034
(43) Date de publication de la demande: 16.12.2020
(73) Titulaire: Ampere SAS, 92100 Boulogne-Billancourt (FR)
(72) Inventeur: RAT, Natalie, 75015 PARIS (FR); AIT EL BACHA, Abdeslam, 94700 MAISONS-ALFORT (FR); DOCHTER, Alexandre, 78180 Montigny le bretonneux (FR)
(74) Mandataire: Renault Group
(86) Numéro de dépôt international: PCT/EP2019/052808
(87) Numéro de publication internationale: WO 2019/154818

(56) Documents cités:
- EP-A1- 3 270 454
- WO-A1-2015/101465
- US-A1- 2011 210 703

## Description

### DOMAINE DE L'INVENTION

L'invention concerne les dispositifs de surveillance de température des sources de chaleur, et plus particulièrement les dispositifs de surveillance comprenant des composants électroniques présentant une résistance variable avec la température de fonctionnement.

### CONTEXTE DE L'INVENTION

La présente invention propose un dispositif de détection de dépassement de température d'une ou plusieurs sources de chaleur permettant l'ajustement du seuil de température surveillé.

On connaît du document CN102195270 un dispositif pour surveiller la température de plusieurs sources de chaleur, constituées par des cellules de batterie. Le dispositif comprend une plaque présentant un volume variable avec la température. La plaque est placée contre une paroi de la cellule à surveiller. En cas de surchauffe, la plaque gonfle et vient actionner mécaniquement un interrupteur disposé en regard de ladite plaque, l'ouverture de l'interrupteur interrompant le passage d'un courant de charge dans la cellule.

Toutefois, cette solution présente un seul paramètre d'ajustement du seuil de température de surchauffe, à savoir la distance entre la plaque et l'interrupteur; il est donc paramétrable uniquement à la fabrication du module comprenant la ou les cellules à surveiller, ensuite il est figé. On ne peut plus ajuster la valeur du seuil de température surveillé. De plus, il provoque la déconnexion brutale des cellules, aucune autre mesure corrective ne peut être envisagée.

On trouve un autre exemple de dispositif de détection de dépassement de température dans le document US2011/210703A1.

Par conséquent, il y a un besoin d'un dispositif de surveillance de la température d'une ou plusieurs sources de chaleur, permettant l'ajustement du seuil de température surveillé.

Dans ce but, l'invention vise à fournir un dispositif de détection de dépassement d'un premier seuil prédéfini d'une température par au moins une source de chaleur, le dispositif de détection comprenant :
- au moins un composant présentant une résistance électrique variable en fonction d'une température de fonctionnement du composant,
- une source d'énergie électrique apte à fournir un courant électrique parcourant ledit composant,

ledit composant étant apte à être couplé thermiquement à ladite source de chaleur, de sorte que la température de fonctionnement varie en fonction :
   - de la température de la source de chaleur et,
   - de la chaleur dégagée par effet Joule dans le composant lorsqu'il est parcouru par le courant électrique,
la résistance électrique variable présentant une haute valeur si la température de fonctionnement est supérieure à un deuxième seuil prédéfini de température, dit seuil de déclenchement,
la source d'énergie électrique étant configurée pour générer le courant électrique de sorte que la température de fonctionnement soit supérieure ou égale au seuil de déclenchement dès lors que la température de ladite source de chaleur est supérieure ou égale au premier seuil de température prédéfini, la résistance électrique variable présentant alors la haute valeur,
   dans lequel la source d'énergie électrique est une source de courant, et dans lequel le courant électrique est fourni sous forme d'impulsions périodiques, de rapport cyclique fixe ou variable.

Dans des modes de réalisation préférés, le dispositif selon l'invention peut avantageusement présenter les caractéristiques suivantes, seules ou en combinaison :
- le dispositif peut être isolé électriquement de la source de chaleur,
- il peut être configuré pour détecter le dépassement du premier seuil de température par une source de chaleur parmi une pluralité de sources de chaleur, et peut comprendre une pluralité de composants sous la forme d'une pluralité de fusibles réarmables, chaque fusible réarmable pouvant être couplé thermiquement à au moins une source de chaleur, les fusibles pouvant être connectés en série,
- il peut comprendre en outre une pluralité de résistances, chacune pouvant avoir une valeur ohmique distincte, une résistance pouvant être connectée en parallèle aux bornes de chaque fusible,
- l'au moins une source de chaleur peut être une cellule de batterie,
- le dispositif peut comprendre en outre un module de surveillance configuré pour déclencher une action de correction ou de signalisation lorsque la résistance électrique variable de l'un desdits composants présente la haute valeur.

Un autre objet de l'invention est un procédé de surveillance de dépassement d'un premier seuil d'une température par au moins une source de chaleur, procédé étant exécuté par d'un dispositif de détection (D) comprenant :
- au moins un composant présentant une résistance électrique variable en fonction d'une température de fonctionnement du composant, la résistance électrique variable présentant une haute valeur si la température de fonctionnement est supérieure à un deuxième seuil prédéfini de température, dit seuil de déclenchement,
- une source d'énergie électrique apte à fournir un courant électrique parcourant ledit composant,
le procédé comprenant :
- une étape de couplage thermique de l'au moins une source de chaleur, à l'au moins un composant, de sorte que la température de fonctionnement varie en fonction :
   ▪ de la température de la source de chaleur et,
   ▪ de la chaleur dégagée par effet Joule dans le composant lorsqu'il est parcouru par le courant électrique,
- une étape de connexion de la source d'énergie électrique à l'au moins un composant ;
- une étape de configuration de la source d'énergie électrique pour générer le courant électrique de sorte que la température de fonctionnement soit supérieure ou égale au seuil de déclenchement dès lors que la température de ladite source de chaleur est supérieure ou égale au premier seuil de température prédéfini, la résistance électrique variable présentant alors la haute valeur,
dans lequel la source d'énergie électrique est une source de courant, et dans lequel le courant électrique est fourni sous forme d'impulsions périodiques, de rapport cyclique fixe ou variable.

Dans des modes de réalisation préférés, le procédé selon l'invention peut avantageusement présenter les caractéristiques suivantes, seules ou en combinaison, dès lors que le peut dispositif de détection peut comprendre :
- une pluralité de composants connectés en série et présentant chacun une résistance électrique variable en fonction de la température de fonctionnement respective et,
- une pluralité de résistances présentant des valeurs ohmiques distinctes, une résistance étant connectée en parallèle aux bornes de chaque composant, de sorte que lorsque la résistance électrique d'un composant présente la haute valeur, la résistance équivalente de la chaîne électrique formée par les composants et les résistances présente une valeur distincte pour chaque composant et la résistance qui lui est connectée en parallèle,

le procédé peut alors comprendre :
   - durant l'étape de couplage thermique, chaque composant est couplé thermiquement à au moins une source de chaleur,
   - durant l'étape de connexion la source d'alimentation électrique est connectée à la chaîne électrique formée par les composants et les résistances,
le procédé peut alors comprendre en outre :
   - une étape de génération d'un signal d'alimentation par la source d'alimentation électrique,
   - une étape de détection d'un signal de réponse aux bornes de la source d'alimentation électrique,
   - une étape de détermination d'une résistance équivalente de la chaîne électrique formée par les composants et les résistances ;
   - une étape d'identification du composant dont la résistance présente la haute valeur, en fonction de la résistance équivalente.

L'étape de configuration peut alors comprendre une sous-étape de dimensionnement du dispositif de détection comprenant la détermination d'un premier rapport cyclique des impulsions périodiques de courant, en fonction :
- du premier seuil de température à surveiller,
- des caractéristiques électriques de l'au moins un composant, et
- des caractéristiques du couplage thermique réalisé entre l'au moins une source de chaleur et l'au moins un composant.

Après une première détection de dépassement du premier seuil de température, l'étape de configuration peut comprendre en outre :
- une sous-étape d'envoi d'impulsions de courant présentant un deuxième rapport cyclique, inférieur au premier rapport cyclique ;
- une sous-étape de confirmation de détection de la première détection de dépassement.

Un autre objet de l'invention est relatif à un véhicule comportant un dispositif de détection de dépassement de température tel que précédemment décrit.

### BREVE DESCRIPTION DES DESSINS

Les figures 1 et 2 représentent schématiquement deux modes de réalisation d'un dispositif de détection de dépassement de température agencé pour surveiller les températures respectives d'une pluralité de cellules de batterie.
Les figures 3 et 4 représentent deux dispositifs de détection de dépassement de température selon deux modes de réalisation de l'invention.
La figure 5 représente les étapes du procédé d'identification d'une source de chaleur ayant dépassé un seuil de température prédéfini, selon un mode de réalisation de l'invention.

### DESCRIPTION DETAILLEE DE L'INVENTION

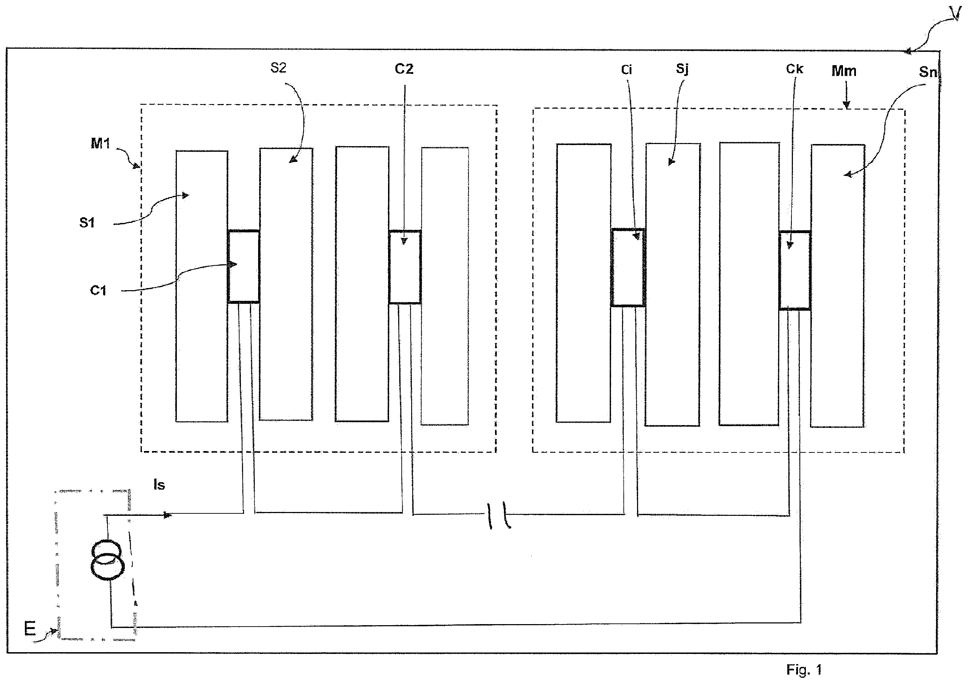

En figure 1 est représenté schématiquement un dispositif de détection selon un mode de réalisation de l'invention. Le dispositif D est installé dans un véhicule V, pour surveiller la température d'une pluralité de sources de chaleur S1, S2, Sj,... Sn constituées par des cellules de batterie, groupées dans des modules M1, ... Mm. Les cellules de batteries sont de type souple, connues sous le terme anglais de «soft-shell».

Le dispositif comprend une pluralité de composants C1, C2, Ci, Ck, présentant une résistance électrique variable R_PTC en fonction d'une température de fonctionnement Tf du composant C1, C2, Ci, Ck. Dans un mode de réalisation préféré, les composants C1, C2, Ci, Ck se présentent sous la forme d'une pluralité de fusibles réarmables.

Chaque fusible réarmable C1, C2, Ci, Ck est couplé thermiquement à au moins une source de chaleur S1, S2, Sj, Sn. Dans l'exemple illustré en figure 1, les sources de chaleur sont des cellules de batterie, et le couplage thermique est réalisé en enrobant chaque fusible réarmable C1, C2, Ci, Ck d'une gaine thermique, qui est ensuite fixée au contact des cellules de batterie. Chaque fusible réarmable C1, C2, Ci, Ck est couplé à deux cellules de batteries, la fixation étant obtenue par compression et/ou collage.

Le dispositif comprend aussi une source d'énergie électrique E apte à fournir un courant électrique Is parcourant les fusibles réarmables C1, C2, Ci, Ck, couplés thermiquement aux cellules de batteries S1, S2, Sj, Sn, de sorte que les températures de fonctionnement respectives des composants C1, C2, Ci, Ck, varie en fonction
- de la température T de la ou les source(s) de chaleur S auxquelles ils sont couplés thermiquement, et
- de la chaleur dégagée par effet Joule dans le composant C1, C2, Ci, Ck lorsqu'il est parcouru par le courant électrique Is.

La résistance électrique variable d'un composant, dans cet exemple un fusible réarmable, présente une haute valeur Rd si la température de fonctionnement Tf du composant est supérieure à un deuxième seuil prédéfini de température, dit seuil de déclenchement Td.

La source d'énergie électrique est configurée pour générer le courant électrique Is de sorte que la température de fonctionnement Tf soit supérieure ou égale au seuil de déclenchement Td dès lors que la température T de ladite source de chaleur S est supérieure ou égale au premier seuil de température prédéfini TS, la résistance électrique variable présentant alors la haute valeur Rd.

Le dispositif D est isolé électriquement de la source de chaleur S. De cette manière les caractéristiques de fonctionnement du dispositif D de détection sont indépendantes de caractéristiques électriques des sources de chaleur à surveiller: le courant Is parcourant les fusible réarmables présente une valeur variant entre 100 mA et 800 mA, pour une tension délivrée par la source d'alimentation E d'une valeur typique de 12 V, tandis que la tension de fonctionnement délivrée par l'ensemble de cellules de batterie s'élève typiquement à 400 V.

Dans l'exemple illustré, la source d'énergie E est une source de courant et les composants C1, C2, Ci, Ck sont connectés en série. De cette manière, le courant électrique Is ne dépend pas du nombre k de composants du dispositif D, ni du nombre n de sources de chaleur à surveiller, ce qui simplifie l'ajustement du premier seuil de température TS. Simplement en baissant le courant Is délivré par la source de courant E, le premier seuil de température TS est augmenté, et inversement.

Comme déjà mentionné, la température de fonctionnement d'un composant, dans cet exemple un fusible réarmable, dépend de la température T de la source de chaleur S à laquelle le composant est couplé thermiquement, et de la chaleur dégagée par effet Joule dans le composant lorsqu'il est parcouru par le courant électrique Is. Ainsi, pour un composant caractérisé par un seuil de température de déclenchement Td donné, l'ajustement du premier seuil de température TS atteint par les sources de chaleur surveillées S1, S2, Sj, Sn, peut être obtenu en variant la chaleur dégagée par effet Joule dans le composant.

Dans un mode de réalisation préféré le courant électrique Is est fourni sous forme d'impulsions périodiques, de rapport cyclique fixe ou variable.

La quantité de chaleur dégagée par effet Joule dans le composant peut être ainsi ajustée en modifiant le temps de passage du courant électrique dans le composant, ce qui peut être obtenu simplement en variant le rapport cyclique des impulsions périodiques.

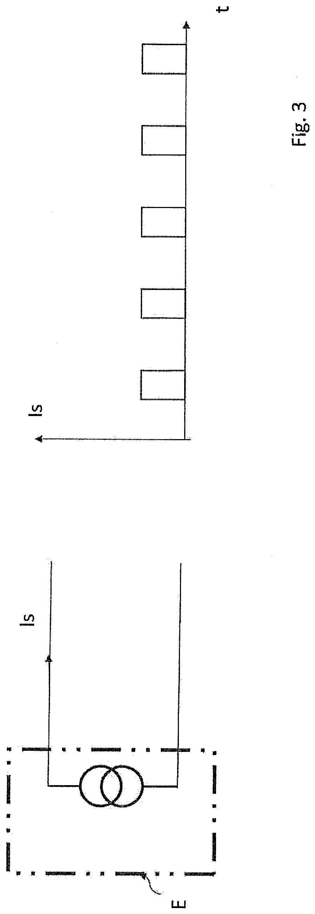

En figure 3 est illustré un mode de réalisation du dispositif de détection intégrant une source d'énergie électrique E configurée pour délivrer un courant électrique Is sous forme d'impulsions électriques.

Dans une phase de dimensionnement E32 du dispositif D de détection, un rapport cyclique fixe peut être déterminé pour chaque application, en fonction du premier seuil de température TS à surveiller, des caractéristiques électriques des composants C1, C2, Ci, Ck, et des caractéristiques du couplage thermique réalisé entre les sources de chaleur à surveiller et ces composants. Ce rapport cyclique, et par conséquent le premier seuil de température TS à surveiller, peut être ainsi ajusté en fonction de spécificités de chaque application.

Dans une phase d'exploitation du dispositif D de détection, la possibilité de varier le rapport cyclique permet d'ajuster le premier seuil de température TS sans intervenir sur l'installation du dispositif D et de son couplage thermique aux sources de chaleur.

Une variation ponctuelle du rapport cyclique, après une première détection de dépassement du premier seuil de température TS, permet de confirmer dans une phase E36 cette première détection, et donc de rendre plus fiable le résultat de la détection, par l'envoi d'impulsions de rapport cyclique inférieur dans une phase E34.

Dans un mode préféré de réalisation, le dispositif D de détection comprend en outre un module de surveillance M configuré pour déclencher une action de correction ou de signalisation lorsque la résistance électrique variable de l'un desdits composants C1, C2, Ci, Cn, présente la haute valeur Rd. Ce module M est configuré pour détecter le changement de valeur de la résistance d'un composant Ci, par exemple en mesurant et la tension et/ou le courant aux bornes de la source d'énergie électrique.

Ensuite le module de surveillance M peut déclencher une action de refroidissement, qui provoquera une baisse de la température des sources de chaleur et des composants C1, C2, Ci, Cn. Cette configuration est particulièrement avantageuse dans le cas des dispositifs de détection D munis de composants C1, C2, Ci, Cn, sous forme de fusibles réarmables. En effet, la résistance variable de ce type de composant retrouve une faible valeur, dite résistance de maintien Rm, une fois la température de fonctionnement descendue, ce qui permet le relancement du processus de surveillance de la température des sources de chaleur.

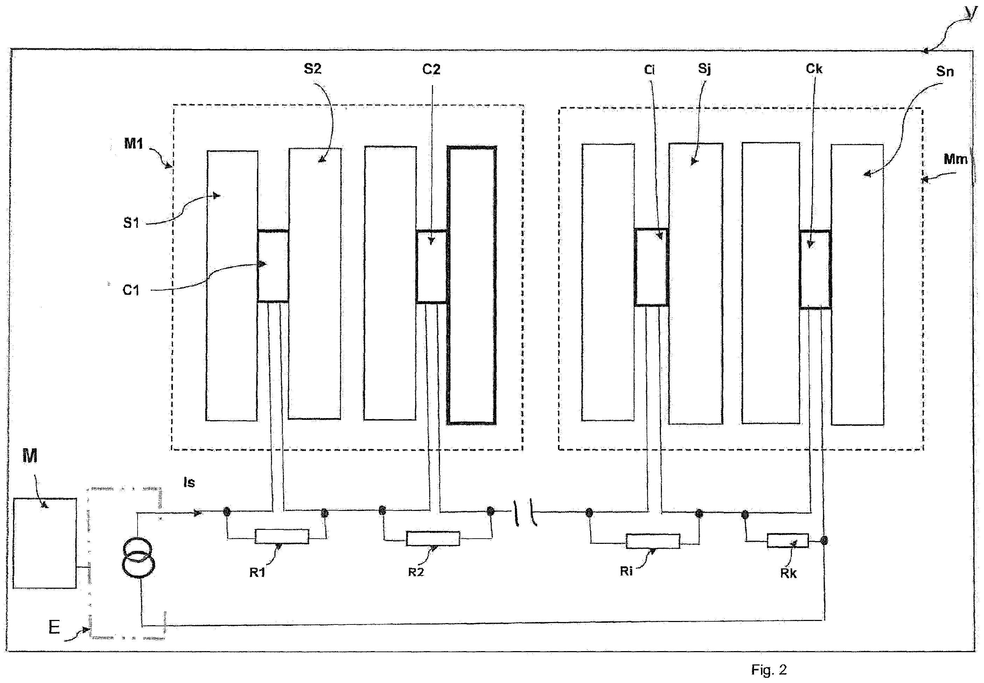

Dans un mode de réalisation préféré, illustré en figure 2, le dispositif D comprend en outre une pluralité de résistances R1, R2, Ri, Rk, chacune ayant une valeur ohmique distincte, une résistance étant connectée en parallèle aux bornes de chaque composant C1, C2, Ci, Ck.

Cet agencement permet l'identification d'un fusible réarmable Ci couplé thermiquement à une source de chaleur Sj, dans cet exemple une cellule de batterie, ayant dépassé le premier seuil de température TS, comme sera expliqué par la suite. Ainsi, des stratégies de refroidissement ciblées au niveau des sources de chaleur peuvent être mises en œuvre.

Un tel dispositif de détection D peut être configuré pour identifier, parmi une pluralité de sources de chaleur S1, S2, Sj, Sn, une source de chaleur Sj ayant dépassé un premier seuil TS prédéfini de température. Le dispositif D comprend une pluralité de composants C1, C2, Ci, Ck connectés en série, et présentant chacun une résistance électrique variable en fonction d'une température de fonctionnement respective, la résistance électrique variable présentant une haute valeur Rd, dite résistance de déclenchement, si la température de fonctionnement Tfj est supérieure au deuxième seuil prédéfini de température, dit seuil de déclenchement Td, et une faible valeur Rm, dite résistance de maintien, dans le cas contraire.

Il est à noter que selon les modes de réalisation, la résistance de maintien Rm d'un composant C1, C2, Ci, Ck, peut correspondre à une valeur proche de 0Ω, et la résistance de déclenchement Rd à un circuit ouvert ; c'est le cas des composants de type fusible ou interrupteur.

Dans le mode de réalisation utilisant des fusibles réarmables, la résistance de maintien Rm présente une résistance typique de 0Ω, et la résistance de déclenchement Rd présente une résistance typique de quelques kΩ.

Dans tous les cas, la valeur de la résistance de maintien Rm est négligeable devant la valeur de la résistance de déclenchement Rd, de sorte que Rd + (k-1)*Rm ≈ Rd, k étant le nombre de composants du dispositif de détection D. L'utilisation de cette caractéristique sera expliquée par la suite.

Chaque composant C1, C2, Ci, Ck est apte à être couplé thermiquement à au moins une des sources de chaleur S1, S2, Sj, Sn, de sorte que sa température de fonctionnement soit supérieure ou égale au seuil de déclenchement Td dès lors que la température de ladite au moins une source de chaleur Si, Sk, Sn, est supérieure ou égale au premier seuil TS prédéfini de température, la résistance électrique variable présentant alors la haute valeur Rd.

Le dispositif D comprend en outre une pluralité de résistances R1, R2, Ri, Rk, présentant des valeurs ohmiques distinctes, une résistance étant connectée en parallèle aux bornes de chaque composant C1, C2, Ci, Ck, de sorte que lorsque la résistance électrique d'un composant Ci présente la haute valeur Rd, la résistance équivalente Re de la chaîne électrique formée par les composants C1, C2, Ci, Ck et les résistances R1, R2, Ri, Rk, présente une valeur caractéristique de ce composant Ci et de la résistance Ri qui lui est connectée en parallèle.

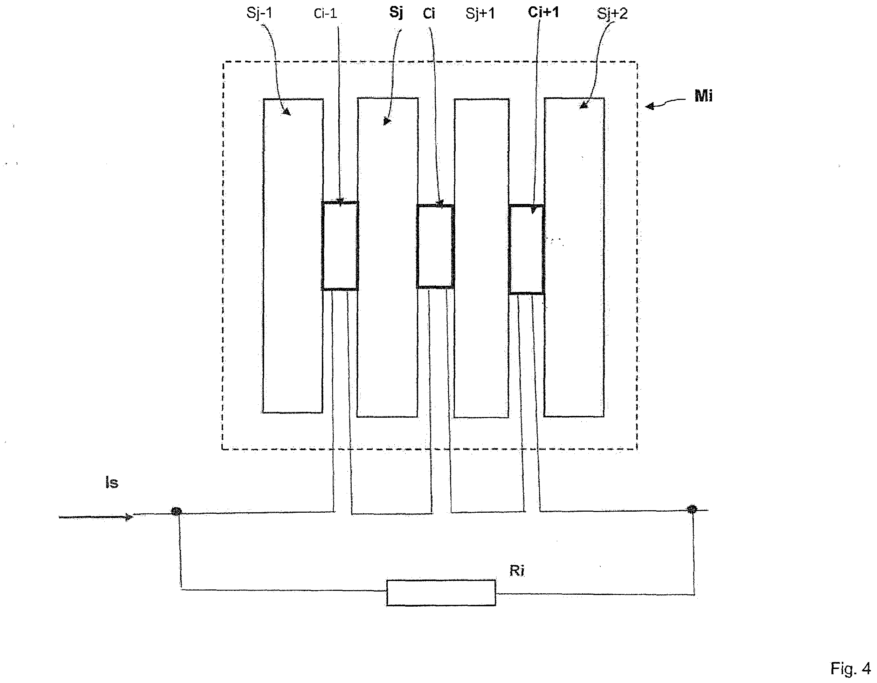

Alternativement, une résistance Ri peut être connectée en parallèle d'un groupe de composants Ci-1, Ci, Ci+1, connectés en série, et couplés chacun à au moins une source de chaleur respective. Cet agencement est particulièrement avantageux si les sources de chaleur sont groupées. Un exemple d'application de ce mode de réalisation de l'invention est la surveillance de la température de cellules de batterie souples, groupées dans de modules de batterie M1, M2,... Mm, comme illustré en figure 4. Si une des cellules de batterie surveillées Sj dépasse le premier seuil prédéfini TS de température, le composant Ci couplé thermiquement à cette cellule Sj présentera la haute valeur de résistance Rd. Si les autres cellules de batterie ne dépassent pas le premier seuil de température TS, l'ensemble des composants connectés en série présentera une résistance équivalente Rd + (k-1)*Rm, k étant le nombre de composants connectés en série ; l'ensemble de ces résistances connecté en parallèle à la résistance Ri présentera une résistance équivalente $Re = Ri * \left[Rd+\left(k-1\right)*Rm\right] / \left[Ri+Rd+\left(k-1\right)*Rm\right] .$

Le choix de composants Ci, et des résistances Ri est fait tel que
1) la valeur de la résistance Rm est négligeable devant celle de Rd ; $Rd + \left(k-1\right) * Rm \approx Rd .$ Par conséquent, comme $Re = Ri * \left[Rd+\left(k-1\right)*Rm\right] / \left[Ri+Rd+\left(k-1\right)*Rm\right] ,$ sa valeur est sensiblement égale à $Re \approx Ri * Rd / \left(Ri+Rd\right) .$
2) Ri est négligeable devant Rd, de sorte que $Ri * Rd / \left(Ri+Rd\right) \approx Ri .$

Par conséquent, la résistance équivalente Re d'une résistance Ri, connecté en parallèle à un composant Ci couplé thermiquement à une cellule de batterie Sj ayant dépassé le premier seuil de température TS, ou à un groupe de composants Ci-1, Ci, Ci+1, connectés en série, dont un composant Ci est couplé thermiquement à une cellule de batterie Sj ayant dépassé le premier seuil de température TS, est sensiblement égale à Ri. En choisissant judicieusement des valeurs ohmiques distinctes pour les résistances R1, R2, ... Ri, Rk, la résistance équivalente de la chaîne électrique considérée présente une valeur caractéristique
- du composant Ci couplé thermiquement à la cellule de batterie Sj ayant dépassé le premier seuil de température TS, ou
- du groupe de composants Ci-1, Ci, Ci+1, connectés en série, dont un composant Ci couplé thermiquement à une cellule de batterie Sk ayant dépassé le premier seuil de température TS
et de la résistance Ri qui lui est connectée en parallèle.

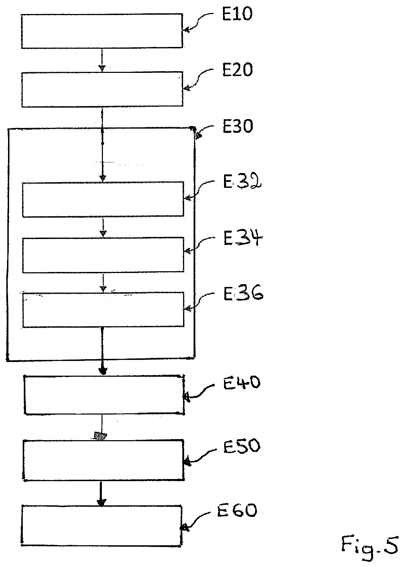

Un procédé d'identification d'une source de chaleur Sj ayant dépassé un premier seuil TS prédéfini d'une température T, parmi une pluralité de sources de chaleur S1, S2, Sj, Sn, sera maintenant décrit en référence à la figure 5.

Le procédé peut être mis en œuvre en utilisant un dispositif de détection tel que décrit ci-dessus, c'est-à-dire comprenant une pluralité de composants C1, C2, Ci, Ck pouvant présenter, en fonction de leur température de fonctionnement, une faible valeur, dite résistance de maintien Rm, ou une haute valeur dite résistance de déclenchement Rd, et une pluralité de résistances R1, R2, Ri, Rk, présentant des valeurs ohmiques distinctes et connectées en parallèle d'un composant Ci ou d'un groupe de composants Ci-1, Ci, Ci+1 connectés en série.

Le procédé comprend
- une étape de couplage E10 thermique de la pluralité de sources de chaleur S1, S2, Sj, Sn, à des composants C1, C2, Ci, Ck, chaque composant étant couplé thermiquement à au moins une source de chaleur Si, de sorte que sa température de fonctionnement soit supérieure ou égale au seuil de déclenchement Td dès lors que la température de ladite au moins une source de chaleur est supérieure ou égale au premier seuil TS prédéfini de température, la résistance électrique variable du composant présentant alors la haute valeur Rd,
- une étape de connexion E20 de la chaîne électrique formée par les composants C1, C2, Ci, Ck et les résistances R1, R2, Ri, Rk, à une source d'énergie électrique E,
- une étape de génération E30 d'un signal d'alimentation U, I par la source d'énergie électrique E,
- une étape de détection E40 d'un signal de réponse i, u aux bornes de la source d'énergie électrique E,
- une étape de détermination E50 d'une résistance équivalente Re de la chaîne électrique formée par les composants C1, C2, Ci, Ck et les résistances R1, R2, Ri, Rk ;
- une étape d'identification E60 du composant Ci dont la résistance présente la haute valeur Rd, en fonction de la résistance équivalente Re.

Dans l'exemple illustré, le signal d'alimentation généré à l'étape de génération E30 est un courant électrique Is, et le signal de réponse détecté à l'étape de détection E40 est une tension aux bornes de la source de courant E.

Connaissant la valeur du courant généré Is, et la valeur de la tension détectée, la résistance équivalente Re de la chaîne électrique est déterminée lors de l'exécution de l'étape détermination E50. Comme expliqué précédemment, cette résistance équivalente est caractéristique du composant Ci, ou du groupe de composants dont un présentant une haute valeur de résistance Rd, et de la résistance Ri qui lui est connecté en parallèle. Ceci permet l'identification de ce composant Ci lors de l'étape d'identification E60.

Bien entendu, la présente invention n'est pas limitée aux exemples et aux modes de réalisation décrits et représentés, mais elle est susceptible de nombreuses variantes accessibles à l'homme du métier.

Par exemple, d'autres agencements sont possibles, en fonction des la configuration des sources de chaleur. En particulier l'invention est applicable à la surveillance des surfaces des sources de chaleur, en réalisant des quadrillages couvrant la surface à surveiller, et en plaçant dans les nœuds du quadrillage des composants tels que décrits, couplés thermiquement à la surface à surveiller.

## Revendications

1. Dispositif (D) de détection de dépassement d'un premier seuil (TS) prédéfini d'une température (T) par au moins une source de chaleur (S), le dispositif (D) de détection comprenant
- au moins un composant (C1, C2, Ci, Ck) présentant une résistance électrique variable en fonction d'une température de fonctionnement du composant (C1, C2, Ci, Ck),
- une source **d'énergie** électrique apte à fournir un courant électrique (Is) parcourant ledit composant (C1, C2, Ci, Ck),
ledit composant (C1, C2, Ci, Ck) étant apte à être couplé thermiquement à ladite source de chaleur (S), de sorte que la température de fonctionnement (Tf) varie en fonction
- de la température (T) de la source de chaleur (S) et
- de la chaleur dégagée par effet Joule dans le composant (C1, C2, Ci, Ck) lorsqu'il est parcouru par le courant électrique (Is),
la résistance électrique variable présentant une haute valeur (Rd) si la température de fonctionnement (Tf) est supérieure à un deuxième seuil prédéfini de température, dit seuil de déclenchement (Td),
la source **d'énergie** électrique étant configurée pour générer le courant électrique (Is) de sorte que la température de fonctionnement (Tf) soit supérieure ou égale au seuil de déclenchement (Td) dès lors que la température (T) de ladite source de chaleur (S) est supérieure ou égale au premier seuil de température prédéfini (TS), la résistance électrique variable présentant alors la haute valeur (Rd),
et **caractérisé en ce que**
la source **d'énergie** électrique est une source de courant, et dans lequel le courant électrique (Is) est fourni sous forme d'impulsions périodiques, de rapport cyclique fixe ou variable, de sorte que la quantité de chaleur dégagée par effet Joule peut être ajustée en modifiant le temps de passage du courant électrique dans le composant.

2. Dispositif (D) selon la revendication précédente, dans lequel le dispositif (D) est isolé électriquement de la source de chaleur (S).

3. Dispositif (D) selon une quelconque des revendications précédentes, **caractérisé en ce qu'**il est configuré pour détecter le dépassement du premier seuil de température (TS) par une source de chaleur parmi une pluralité de sources de chaleur (S1, S2, Sj, Sn), et **en ce qu'**il comprend une pluralité de composants (C1, C2, Ci, Ck) sous la forme **d'une** pluralité de fusibles réarmables, chaque fusible réarmable (C1, C2, Ci, Ck) étant couplé thermiquement à au moins une source de chaleur (S1, S2, Sj), les fusibles (C1, C2, Ci, Ck) étant connectés en série.

4. Dispositif (D) selon la revendication précédente, comprenant en outre une pluralité de résistances (R1, R2, Ri, Rk), chacune ayant une valeur ohmique distincte, une résistance étant connectée en parallèle aux bornes de chaque fusible (C1, C2, Ci, Ck).

5. Dispositif (D) selon une quelconque des revendications précédentes, dans lequel l'au moins une source de chaleur est une cellule de batterie.

6. Dispositif selon une quelconque des revendications précédentes, comprenant en outre un module de surveillance(M) configuré pour déclencher une action de correction ou de signalisation lorsque la résistance électrique variable de l'un desdits composants (C1, C2, Ci, Ck) présente la haute valeur (Rd).

7. Procédé de surveillance de dépassement d'un premier seuil (TS) d'une température (T) par au moins une source de chaleur (S, S1, Si, Sk, Sn) le procédé étant exécuté par d'un dispositif de détection (D) comprenant
- au moins un composant (C1, C2, Ci, Ck) présentant une résistance électrique variable en fonction d'une température de fonctionnement (Tf) du composant, la résistance électrique variable présentant une haute valeur (Rd) si la température de fonctionnement (Tf) est supérieure à un deuxième seuil prédéfini de température, dit seuil de déclenchement (Td),
- une source d'énergie électrique apte à fournir un courant électrique (Is) parcourant ledit composant (C1, C2, Ci, Ck),
le procédé comprenant :
- une étape de couplage thermique (E10) de l'au moins une source de chaleur (S, S1, Si, Sk, Sn), à l'au moins un composant (C1, C2, Ci, Ck), de sorte que la température de fonctionnement (Tf) varie en fonction
∘ de la température (T) de la source de chaleur (S) et
∘ de la chaleur dégagée par effet Joule dans le composant (C1, C2, Ci, Ck) lorsqu'il est parcouru par le courant électrique (Is),
- une étape de connexion (E20) de la source d'énergie électrique (E) à l'au moins un composant (C1, C2, Ci, Ck) ;
- une étape de configuration (E30) de la source d'énergie électrique pour générer le courant électrique (Is) de sorte que la température de fonctionnement (Tf) soit supérieure ou égale au seuil de déclenchement (Td) dès lors que la température (T) de ladite source de chaleur (S) est supérieure ou égale au premier seuil de température prédéfini (TS), la résistance électrique variable présentant alors la haute valeur (Rd) ,
dans lequel la source d'énergie électrique est une source de courant, et dans lequel le courant électrique (Is) est fourni sous forme d'impulsions périodiques, de rapport cyclique fixe ou variable, de sorte que la quantité de chaleur dégagée par effet Joule peut être ajustée en modifiant le temps de passage du courant électrique dans le composant.

8. Procédé de surveillance selon la revendication précédente, dans lequel le dispositif de détection (D) comprend
une pluralité de composants (Cj) connectés en série et présentant chacun une résistance électrique variable en fonction de la température de fonctionnement (Tfj) respective,
et une pluralité de résistances (Rj) présentant des valeurs ohmiques distinctes, une résistance étant connectée en parallèle aux bornes de chaque composant (Cj), de sorte que lorsque la résistance électrique d'un composant (Ck) présente la haute valeur (Rd), la résistance équivalente (Re) de la chaîne électrique formée par les composants (Cj) et les résistances (Rj) présente une valeur distincte pour chaque composant (Ck) et la résistance (Rk) qui lui est connectée en parallèle,
et dans lequel
- durant l'étape de couplage thermique (E10), chaque composant (Cj) est couplé thermiquement à au moins une source de chaleur (Si, Sk),
- durant l'étape de connexion (E20) la source d'alimentation électrique (E) est connectée à la chaîne électrique formée par les composants (Cj) et les résistances (Rj),
le procédé comprenant en outre
- une étape de génération (E30) d'un signal d'alimentation (I) par la source d'alimentation électrique (E),
- une étape de détection (E40) d'un signal de réponse (u) aux bornes de la source d'alimentation électrique (E),
- une étape de détermination (E50) d'une résistance équivalente (Re) de la chaîne électrique formée par les composants (Cj) et les résistances (Rj) ;
- une étape d'identification (E60) du composant (Ck) dont la résistance présente la haute valeur (Rd), en fonction de la résistance équivalente (Re).

9. Procédé de surveillance selon une des revendications 7 ou 8, dans lequel l'étape de configuration (E30) comprend une sous-étape de dimensionnement (E32) du dispositif (D) de détection comprenant la détermination d'un premier rapport cyclique des impulsions périodiques de courant, en fonction :
- du premier seuil de température (TS) à surveiller,
- des caractéristiques électriques de l'au moins un composant (C1, C2, Ci, Ck), et
- des caractéristiques du couplage thermique réalisé entre l'au moins une source de chaleur (S) et l'au moins un composant (C1, C2, Ci, Ck).

10. Procédé de surveillance selon la revendication précédente, dans lequel, après une première détection de dépassement du premier seuil de température (TS), l'étape de configuration (E30) comprend en outre :
- une sous-étape d'envoi (E34) d'impulsions de courant présentant un deuxième rapport cyclique, inférieur au premier rapport cyclique ;
- une sous-étape de confirmation (E36) de détection de la première détection de dépassement.

11. Véhicule (V) comportant un dispositif de détection (D) de dépassement d'un seuil prédéfini de température (TS) selon une des revendications 1 à 6.

## Patentansprüche

1. Vorrichtung (D) zur Detektion einer Überschreitung eines vordefinierten ersten Schwellenwerts (TS) einer Temperatur (T) durch mindestens eine Wärmequelle (S), die Vorrichtung (D) zur Detektion umfassend
- mindestens eine Komponente (C1, C2, Ci, Ck), die einen in Abhängigkeit von einer Betriebstemperatur der Komponente (C1, C2, Ci, Ck) variablen elektrischen Widerstand aufweist;
- eine elektrische Energiequelle, die in der Lage ist, einen elektrischen Strom (Is) abzugeben, der durch die Komponente (C1, C2, Ci, Ck) fließt;
wobei die Komponente (C1, C2, Ci, Ck) in der Lage ist, thermisch mit der Wärmequelle (S) gekoppelt zu werden, so dass die Betriebstemperatur (Tf) variiert in Abhängigkeit
- von der Temperatur (T) der Wärmequelle (S) und
- von der Wärme, die durch den Joule-Effekt in der Komponente (C1, C2, Ci, Ck) freigesetzt wird, wenn sie von dem elektrischen Strom (Is) durchflossen wird,
wobei der variable elektrische Widerstand einen hohen Wert (Rd) aufweist, wenn die Betriebstemperatur (Tf) höher als ein vordefinierter zweiter Temperaturschwellenwert, Auslöseschwellenwert (Td) genannt, ist,
wobei die elektrische Energiequelle dazu konfiguriert ist, den elektrischen Strom (Is) so zu erzeugen, dass die Betriebstemperatur (Tf) größer oder gleich dem Auslöseschwellenwert (Td) ist, sobald die Temperatur (T) der Wärmequelle (S) größer oder gleich dem vordefinierten ersten Temperaturschwellenwert (TS) ist, wobei der variable elektrische Widerstand dann den hohen Wert (Rd) aufweist,
und **dadurch gekennzeichnet, dass**
die elektrische Energiequelle eine Stromquelle ist, in welcher der elektrische Strom (Is) in Form von periodischen Impulsen mit festem oder variablem Tastverhältnis abgegeben wird, so dass die durch den Joule-Effekt freigesetzte Wärmemenge angepasst werden kann, in dem die Durchgangszeit des elektrischen Stroms durch die Komponente geändert wird.

2. Vorrichtung (D) nach dem vorhergehenden Anspruch, wobei die Vorrichtung (D) von der Wärmequelle (S) elektrisch isoliert ist.

3. Vorrichtung (D) nach einem der vorhergehenden Ansprüche, **dadurch gekennzeichnet, dass** sie dazu konfiguriert ist, die Überschreitung des ersten Temperaturschwellenwerts (TS) durch eine Wärmequelle unter einer Mehrzahl von Wärmequellen (S1, S2, Sj, Sn) zu detektieren, und dass sie eine Mehrzahl von Komponenten (C1, C2, Ci, Ck) in Form einer Mehrzahl von rückstellbaren Sicherungen umfasst, wobei jede rückstellbare Sicherung (C1, C2, Ci, Ck) thermisch mit mindestens einer Wärmequelle (S1, S2, Sj) gekoppelt ist, wobei die Sicherungen (C1, C2, Ci, Ck) in Reihe geschaltet sind.

4. Vorrichtung (D) nach dem vorhergehenden Anspruch, umfassend ferner eine Mehrzahl von Widerständen (R1, R2, Ri, Rk), von denen jeder einen unterschiedlichen ohmschen Wert hat, wobei ein Widerstand parallel zu den Klemmen jeder Sicherung (C1, C2, Ci, Ck) geschaltet ist.

5. Vorrichtung (D) nach einem der vorhergehenden Ansprüche, wobei die mindestens eine Wärmequelleneinheit eine Batteriezelle ist.

6. Vorrichtung nach einem der vorhergehenden Ansprüche, umfassend ferner ein Überwachungsmodul (M), das dazu konfiguriert ist, eine Korrektur- oder Signalisierungsaktion auszulösen, wenn der variable elektrische Widerstand einer der Komponenten (C1, C2, Ci, Ck) den hohen Wert (Rd) aufweist.

7. Verfahren zur Überwachung der Überschreitung eines ersten Schwellenwerts (TS) einer Temperatur (T) durch mindestens eine Wärmequelle (S, S1, Si, Sk, Sn), wobei das Verfahren von einer Vorrichtung (D) zur Detektion ausgeführt wird, umfassend
- mindestens eine Komponente (C1, C2, Ci, Ck), die einen in Abhängigkeit von einer Betriebstemperatur (Tf) der Komponente variablen elektrischen Widerstand aufweist, wobei der variable elektrische Widerstand einen hohen Wert (Rd) aufweist, wenn die Betriebstemperatur (Tf) höher als ein vordefinierter zweiter Temperaturschwellenwert, Auslöseschwellenwert (Td) genannt, ist,
- eine elektrische Energiequelle, die in der Lage ist, einen elektrischen Strom (Is) abzugeben, der durch die Komponente (C1, C2, Ci, Ck) fließt;
das Verfahren umfassend:
- einen Schritt des thermischen Koppelns (E10) der mindestens einen Wärmequelle (S, S1, Si, Sk, Sn) mit der mindestens einen Komponente (C1, C2, Ci, Ck), so dass die Betriebstemperatur (TF) variiert in Abhängigkeit
∘ von der Temperatur (T) der Wärmequelle (S) und
∘ von der Wärme, die durch den Joule-Effekt in der Komponente (C1, C2, Ci, Ck) freigesetzt wird, wenn sie von dem elektrischen Strom (Is) durchflossen wird,
- einen Schritt des Anschließens (E20) der elektrischen Energiequelle (E) an die mindestens eine Komponente (C1, C2, Ci, Ck);
- einen Schritt des Konfigurierens (E30) der elektrischen Energiequelle, um den elektrischen Strom (Is) so zu erzeugen, dass die Betriebstemperatur (Tf) größer oder gleich dem Auslöseschwellenwert (Td) ist, sobald die Temperatur (T) der Wärmequelle (S) größer oder gleich dem vordefinierten ersten Temperaturschwellenwert (Ts) ist, wobei der variable elektrische Widerstand dann den hohen Wert (Rd) aufweist,
wobei die elektrische Energiequelle eine Stromquelle ist, in welcher der elektrische Strom (Is) in Form von periodischen Impulsen mit festem oder variablem Tastverhältnis abgegeben wird, so dass die durch den Joule-Effekt freigesetzte Wärmemenge angepasst werden kann, in dem die Durchgangszeit des elektrischen Stroms durch die Komponente geändert wird.

8. Verfahren zur Überwachung nach dem vorhergehenden Anspruch, wobei die Vorrichtung (D) zur Detektion umfasst eine Mehrzahl von Komponenten (Cj), die in Reihe geschaltet sind und jeweils einen in Abhängigkeit von der jeweiligen Betriebstemperatur (Tfj) variablen elektrischen Widerstand aufweisen,
und eine Mehrzahl von Widerständen (Rj), die unterschiedliche ohmsche Werte aufweisen, wobei ein Widerstand parallel zu den Klemmen jeder Komponente (Cj) geschaltet ist, so dass, wenn der elektrische Widerstand einer Komponente (Ck) den hohen Wert (Rd) aufweist, der äquivalente Widerstand (Re) der elektrischen Kette, die aus den Komponenten (Cj) und den Widerständen (Rj) gebildet wird, einen unterschiedlichen Wert für jede Komponente (Ck) und den parallel zu ihr geschalteten Widerstand (Rk) aufweist,
und wobei
- während des Schritts des thermischen Koppelns (E10) jede Komponente (Cj) thermisch mit mindestens einer Wärmequelle (Si, Sk) gekoppelt wird,
- während des Schritts des Anschließens (E20) die elektrische Versorgungsquelle (E) an die aus den Komponenten (Cj) und den Widerständen (Rj) gebildete elektrische Kette angeschlossen wird,
das Verfahren umfassend ferner
- einen Schritt des Erzeugens (E30) eines Versorgungssignals (I) durch die elektrische Versorgungsquelle (E),
- einen Schritt des Detektierens (E40) eines Antwortsignals (u) an den Klemmen der elektrischen Versorgungsquelle (E),
- einen Schritt des Bestimmens (E50) eines äquivalenten Widerstands (Re) der aus den Komponenten (Cj) und den Widerständen (Rj) gebildeten elektrischen Kette;
- einen Schritt des Identifizierens (E60) der Komponente (Ck), deren Widerstand den hohen Wert (Rd) aufweist, in Abhängigkeit von dem äquivalenten Widerstand (Re).

9. Verfahren zur Überwachung nach einem der Ansprüche 7 oder 8, wobei der Schritt des Konfigurierens (E30) einen Teilschritt des Dimensionierens (E32) der Vorrichtung (D) zur Detektion umfasst, der das Bestimmen eines ersten Tastverhältnisses der periodischen Stromimpulse umfasst, in Abhängigkeit:
- von dem zu überwachenden ersten Temperaturschwellenwert (TS),
- von den elektrischen Merkmalen der mindestens einen Komponente (C1, C2, Ci, Ck), und
- von den Merkmalen der zwischen der mindestens einen Wärmequelle (S) und der mindestens einen Komponente (C1, C2, Ci, Ck) ausgeführten thermischen Kopplung.

10. Verfahren zur Überwachung nach dem vorhergehenden Anspruch, wobei nach einer ersten Detektion einer Überschreitung des ersten Temperaturschwellenwerts (TS) der Schritt des Konfigurierens (E30) ferner umfasst:
- einen Teilschritt des Sendens (E34) von Stromimpulsen, die ein zweites Tastverhältnis aufweisen, das kleiner als das erste Tastverhältnis ist;
- einen Teilschritt des Bestätigens (E36) der Detektion der ersten Überschreitungsdetektion.

11. Fahrzeug (V), das eine Vorrichtung (D) zur Detektion einer Überschreitung eines vordefinierten Temperaturschwellenwerts (TS) nach einem der Ansprüche 1 bis 6 umfasst.

## Claims

1. Device (D) for detecting exceedance of a first predefined threshold (TS) of a temperature (T) by at least one heat source (S), the detecting device (D) comprising
- at least one component (C1, C2, Ci, Ck) having an electrical resistance that is variable depending on an operating temperature of the component (C1, C2, Ci, Ck),
- an electrical power source able to deliver an electrical current (Is) that flows through said component (C1, C2, Ci, Ck),
said component (C1, C2, Ci, Ck) being able to be thermally coupled to said heat source (S), so that the operating temperature (Tf) varies depending on
- the temperature (T) of the heat source (S) and
- the heat given off by Joule heating in the component (C1, C2, Ci, Ck) when the electrical current (Is) flows therethrough,
the variable electrical resistance having a high value (Rd) if the operating temperature (Tf) is higher than a second predefined temperature threshold, called the trip threshold (Td),
the electrical power source being configured to generate the electrical current (Is) so that the operating temperature (Tf) is higher than or equal to the trip threshold (Td) if the temperature (T) of said heat source (S) is higher than or equal to the first predefined temperature threshold (TS), the variable electrical resistance then having the high value (Rd),
and **characterized in that**
the electrical power source is a current source, and wherein the electrical current (Is) is delivered in the form of periodic pulses, of fixed or variable duty cycle, so that the amount of heat generated by Joule heating may be adjusted by modifying the time for which electrical current passes through the component.

2. Device (D) according to the preceding claim, wherein the device (D) is electrically isolated from the heat source (S).

3. Device (D) according to either one of the preceding claims, **characterized in that** it is configured to detect the exceedance of the first temperature threshold (TS) by one heat source among a plurality of heat sources (S1, S2, Sj, Sn), and **in that** it comprises a plurality of components (C1, C2, Ci, Ck) taking the form of a plurality of resettable fuses, each resettable fuse (C1, C2, Ci, Ck) being thermally coupled to at least one heat source (S1, S2, Sj), the fuses (C1, C2, Ci, Ck) being connected in series.

4. Device (D) according to the preceding claim, furthermore comprising a plurality of resistors (R1, R2, Ri, Rk), each having a different resistance, one resistor being connected in parallel across the terminals of each fuse (C1, C2, Ci, Ck).

5. Device (D) according to any one of the preceding claims, wherein the at least one heat source is a battery cell.

6. Device according to any one of the preceding claims, furthermore comprising a monitoring module (M) configured to trigger a correcting or flagging action when the variable electrical resistance of one of said components (C1, C2, Ci, Ck) has the high value (Rd).

7. Method for monitoring exceedance of a first threshold (TS) of a temperature (T) by at least one heat source (S, S1, Si, Sk, Sn), the method being executed by a detecting device (D) comprising
- at least one component (C1, C2, Ci, Ck) having an electrical resistance that is variable depending on an operating temperature (Tf) of the component, the variable electrical resistance having a high value (Rd) if the operating temperature (Tf) is higher than a second predefined temperature threshold, called the trip threshold (Td),
- an electrical power source able to deliver an electrical current (Is) that flows through said component (C1, C2, Ci, Ck),
the method comprising:
- a step (E10) of thermally coupling the at least one heat source (S, S1, Si, Sk, Sn) to the at least one component (C1, C2, Ci, Ck), so that the operating temperature (Tf) varies depending on
∘ the temperature (T) of the heat source (S) and
∘ the heat given off by Joule heating in the component (C1, C2, Ci, Ck) when the electrical current (Is) flows therethrough,
- a step (E20) of connecting the electrical power source (E) to the at least one component (C1, C2, Ci, Ck);
- a step (E30) of configuring the electrical power source to generate the electrical current (Is) so that the operating temperature (Tf) is higher than or equal to the trip threshold (Td) if the temperature (T) of said heat source (S) is higher than or equal to the first predefined temperature threshold (TS), the variable electrical resistance then having the high value (Rd),
wherein the electrical power source is a current source, and wherein the electrical current (Is) is delivered in the form of periodic pulses, of fixed or variable duty cycle, so that the amount of heat generated by Joule heating may be adjusted by modifying the time for which electrical current passes through the component.

8. Monitoring method according to the preceding claim, wherein the detecting device (D) comprises
a plurality of components (Cj) connected in series and each having an electrical resistance that is variable depending on the respective operating temperature (Tfj), and a plurality of resistors (Rj) that have different resistances, one resistor being connected in parallel across the terminals of each component (Cj), so that, when the electrical resistance of a component (Ck) has the high value (Rd), the equivalent resistance (Re) of the electrical chain formed by the components (Cj) and the resistors (Rj) has a different value for each component (Ck) and the resistor (Rk) that is connected thereto in parallel,
and wherein
- during the thermal coupling step (E10), each component (Cj) is thermally coupled to at least one heat source (Si, Sk),
- during the connecting step (E20), the electrical power source (E) is connected to the electrical chain formed by the components (Cj) and the resistors (Rj), the method furthermore comprising
- a step (E30) of generating a supply signal (I) with the electrical power source (E),
- a step (E40) of detecting a response signal (u) across the terminals of the electrical power source (E),
- a step (E50) of determining an equivalent resistance (Re) of the electrical chain formed by the components (Cj) and the resistors (Rj);
- a step (E60) of identifying the component (Ck) the resistance of which has the high value (Rd), depending on the equivalent resistance (Re).

9. Monitoring method according to either of Claims 7 and 8, wherein the configuring step (E30) comprises a sub-step (E32) of dimensioning the detecting device (D) comprising determining a first duty cycle of the periodic current pulses, depending on:
- the first temperature threshold (TS) to be monitored,
- the electrical characteristics of the at least one component (C1, C2, Ci, Ck), and
- the characteristics of the thermal coupling between the at least one heat source (S) and the at least one component (C1, C2, Ci, Ck).

10. Monitoring method according to the preceding claim, wherein, after a first detection of exceedance of the first temperature threshold (TS), the configuring step (E30) furthermore comprises:
- a sub-step (E34) of transmitting current pulses having a second duty cycle lower than the first duty cycle;
- a sub-step (E36) of confirming detection of the first exceedance detection.

11. Vehicle (V) comprising a device (D) for detecting exceedance of a predefined temperature threshold (TS) according to one of Claims 1 to 6.
